# EUROPÄISCHE PATENTSCHRIFT

(11) **EP 1 332 922 B1**
(45) Veröffentlichungstag und Bekanntmachung des Hinweises auf die Patenterteilung: **30.08.2006**
(21) Anmeldenummer: 03002046.5
(22) Anmeldetag: 29.01.2003
(51) Int. Cl.: H04R 1/08, B60R 11/02

(54) **Mikrophonbaugruppe für Fahrzeugfreisprecheinrichtung und Fahrzeugfreisprecheinrichtung**
Microphone assembly for a vehicular hands-free device and vehicular hands-free device
Ensemble microphone pour un dispositif mains libres véhiculaire et dispositif mains libres véhiculaire

(30) Priorität: 30.01.2002 DE 10203599
(43) Veröffentlichungstag der Anmeldung: 06.08.2003
(73) Patentinhaber: ArvinMeritor GmbH, 63128 Dietzenbach (DE)
(72) Erfinder: Lane, Peter, 64853 Otzberg-Heringen (DE)
(74) Vertreter: Kitzhofer, Thomas

(56) Entgegenhaltungen:
- WO-A-96/31994
- DE-A- 10 033 985
- DE-A- 10 037 346
- DE-A- 10 043 918
- DE-A- 19 801 300
- US-A- 5 687 230
- US-A- 6 108 566
- US-A- 6 111 964

## Beschreibung

Die Erfindung betrifft eine Mikrophonbaugruppe einer Fahrzeugfreisprecheinrichtung nach dem oberbegriff des Anspruchs 1. Diese Mikrophonbaugruppe kann entweder ursprünglich bereits im gelieferten Fahrzeug eingebaut sein, sie kann aber auch sehr einfach nachgerüstet werden. Ferner betrifft die Erfindung eine Fahrzeugfreisprecheinrichtung.

Bisher werden Freisprecheinrichtungen beispielsweise im Innenraum an die A-Säulenverkleidung geschraubt oder in die Innenbeleuchtungseinheit integriert. Die von außen aufgesetzten Mikrophone können, da sie von der Verkleidung abstehen, versehentlich abgerissen werden, und die integrierten Mikrophone müssen oft aufwendig abgeschirmt werden, damit Fahrzeugvibrationen oder Schwingungen nicht die Akustik stören. Auch ist die Empfangsqualität dieser Mikrophone erheblich reduziert, da sie nicht direkt auf die Schallquelle ausgerichtet werden können.

Aus der gattungsgemäßen WO-A-96/31994 ist eine Mikrofonbaugruppe bekannt, die beispielsweise am Dachrahmen von der Fahrzeuginnenseite her befestigt wird. Eine Teleskopstange verbindet eine Mikrofoneinheit mit einem Befestigungssockel.

Eine ähnliche Mikrofonbaugruppe ist aus der US-A-6,111,994 bekannt. Hier ist die Mikrofoneinheit auf einem Schwenkarm befestigt, dessen Schwenklager an einem an der A-Säule befestigten Lagerbock arretiert ist. In der Grundstellung verläuft der Schwenkarm innenseitig parallel zur A-Säule. Aus dieser Stellung kann die Mikrofoneinheit mit dem Schwenkarm mehr zum Insassen herabgeschwenkt werden, wodurch auch die Mikrofoneinheit eingeschaltet wird.

Die Erfindung schafft eine Mikrophonbaugruppe einer Fahrzeugfreisprecheinrichtung, die diese Nachteile vermeidet und die dennoch einfach ins Fahrzeug eingebaut werden kann.

Dies wird durch eine Mikrophonbaugruppe nach Anspruch 1 erreicht. Die erfindungsgemäße Mikrophonbaugruppe zeichnet sich folglich dadurch aus, daß die für die Aufnahme notwendige Mikrophoneinheit einerseits versenkt werden kann und damit nicht weit in den Innenraum vorsteht wie im Stand der Technik. Andererseits kann die Mikrophoneinheit durch den Bediener in die ausgefahrene Stellung gebracht werden, also näher zu der telefonierenden Person und weiter von den Innenraumverkleidungen weg. Die Mikrophoneinheit wird durch ihr Ausfahren in einen Kommunikationsmodus geschaltet, wogegen in der eingefahrenen Stellung der Kommunikationsmodus ausgeschaltet ist. Mit dem Ein- und Ausfahren wird damit auch der Zustand der Mikrophoneinheit gesteuert. Da die Mikrophoneinheit üblicherweise sowieso möglichst nahe am Fahrer positioniert ist, kann dieser sehr leicht die Mikrophoneinheit betätigen, um ihr Ausfahren zu initiieren und das Mikrophon dadurch einzuschalten. Er muß sich nicht, wie bei Nachrüstsätzen bislang üblich, in Richtung zum Fußraum des Beifahrers orientieren. Darüber hinaus kann eventuell aber auch das Telefonat angenommen oder das Telefon zum Telefonieren ausgeschaltet werden. Die Führung ist eine die Mikrophoneinheit umgebende Buchse, die die Mikrophoneinheit in der eingefahrenen Stellung aufnimmt. Vorzugsweise steht die Mikrophoneinheit in der eingefahrenen Stellung fast gar nicht gegenüber der Buchse vor.

Darüber hinaus ist vorgesehen, daß eine Befestigungseinrichtung an der Führung angreift, mit der die Baugruppe in einem Verkleidungsteil im Fahrzeuginneren befestigbar ist. Vorzugsweise ist die Mikrophonbaugruppe eine vormontierte Einheit, die nur noch in eine Öffnung im Verkleidungsteil eingesetzt werden muß. Eine Rastverbindung als Befestigungseinrichtung erlaubt es, die gesamte Mikrophonbaugruppe in der Öffnung in dem Verkleidungsteil durch Eindrücken zu befestigen.

Vorzugsweise ist ein Antrieb zum Ausfahren der Mikrophoneinheit vorgesehen, der von Energiequellen des Fahrzeugs entkoppelt sein sollte, um die Montage zu erleichtern.

In diesem Zusammenhang ist es bevorzugt, daß die Baugruppe einen Energiespeicher hat, der die von der Bedienperson aufgebrachte Energie zum Zurückschieben der Mikrophoneinheit in die eingefahrene Stellung speichert und sie beim selbsttätigen Herausfahren wenigstens teilsweise wieder abgibt. Der Ausfahrmechanismus ist vorzugsweise ein sogenannter Pop-Out-Mechanismus, bei dem die auszufahrende Mikrophoneinheit zuerst in Richtung entgegen der ausgefahrenen Stellung gedrückt wird, um die Energie zum Ausfahren freizugeben. Vorzugsweise wird durch das Drücken ein Rastmechanismus entriegelt, der den Antrieb freigibt.

Der Antrieb ist vorzugsweise ein wartungsfreier Federantrieb.

Die Mikrophoneinheit wird in der ausgefahrenen Stellung gehalten, was beispielsweise durch eine vom Federantrieb ausgehende Vorspannkraft erfolgt.

Durch Drücken auf die Mikrophoneinheit wird diese in die ausgefahrene Stellung verschoben. Alternativ könnte natürlich auch ein Betätigungsknopf vorgesehen sein, der aber in der bevorzugten Ausführungsform überflüssig wird, da die Mikrophoneinheit auch den Betätigungsschalter bildet.

Darüber hinaus ist bevorzugt eine Dämpfung vorgesehen, die beim Ausfahren vor der vollständig ausgefahrenen Stellung wirksam wird, um die Mikrophoneinheit abzubremsen.

Die Mikrophoneinheit sollte zumindest in der ausgefahrenen Stellung in oder zusammen mit der Führung verschwenkbar sein.

Dieses Verschwenken soll es erlauben, das Mikrophon unterschiedlich auszurichten, also zum Beispiel auch auf den Beifahrer hin auszurichten.

Vorteilhaft kann es auch sein, wenn die Führung so bogenförmig ausgebildet ist, daß die Mikrophoneinheit auf einer bogenförmigen Bahn in die ausgefahrene Stellung verfahrbar ist. Damit läßt sich einerseits die axiale Länge der Mikrophonbaugruppe verringern, und andererseits kann die Mikrophoneinheit in der ausgefahrenen Stellung wie ein Exzenter verschwenkbar sein, so daß das freie Ende der Mikrophoneinheit auf einem Kreisbogen bewegt wird.

Hierbei sollten die Mikrophoneingangsöffnungen am freien Ende der Mikrophoneinheit so angeordnet sein, daß sie durch Schwenken in eine andere Richtung ausgerichtet werden können.

Ein sehr einfacher, kompakter Aufbau ergibt sich dann, wenn die Mikrophoneinheit die Gestalt eines quer zur Längsachse gebogenen Zylinders hat, dessen Außenkontur die Führungsfläche hat, die an der Führung, die in diesem Fall z.B. eine Buchse ist, großflächig anliegen kann.

Vorzugsweise ist zusätzlich eine Kulissenführung vorgesehen, durch die die Mikrophoneinheit in der eingefahrenen Stellung gehalten wird. Durch die Kulissenführung wird eine robuste Verriegelung in der eingefahrenen Stellung geschaffen.

Die Kulisse kann sehr kostengünstig ausgeführt werden, wenn sie auf der Innenseite der buchsenförmigen Führung vorgesehen ist, so daß keine zusätzlichen Teile für die Kulisse benötigt werden.

Von der Mikrophoneinheit kann seitlich ein elastischer, in die Kulisse hineinragender Fortsatz vorstehen.

Die Erfindung betrifft darüber hinaus eine Fahrzeugfreisprecheinrichtung mit einer erfindungsgemäßen Mikrophonbaugruppe. Durch Ausfahren der Mikrophoneinheit wird diese sowie die gesamte Freisprecheinrichtung in den Kommunikationsmodus geschaltet. Dieser Kommunikationsmodus kann mehr oder weniger Funktionen umfassen. In einer einfachen Ausführungsform kann nur das Mikrophon eingeschaltet werden, zum Beispiel während eines schon laufenden Telefonats. Darüber hinaus kann zum Beispiel auch nicht nur das Mikrophon eingeschaltet, sondern auch ein gerade ankommendes Gespräch angenommen werden. Eine weitere mögliche Funktion ist das Einschalten der Freisprecheinrichtung durch Betätigung der Mikrophoneinheit. Die Freisprecheinrichung kann dadurch in einen Modus gebracht werden, der zum Beispiel das Anrufen mittels Sprachwahl erlaubt.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 eine Draufsicht auf ein Fahrzeugdach, in dessen Dachhimmelverkleidung die erfindungsgemäße Mikrophonbaugruppe integriert ist,
- Figur 2 einen Schnitt durch das Fahrzeugdach im Bereich der Mikrophonbaugruppe längs der Linie II-II,
- Figur 3 die erfindungsgemäße Fahrzeugfreisprecheinrichtung und einen Schnitt durch das Fahrzeugdach längs der Linie III-III in Figur 1,
- Figur 4 einen vergrößerten Schnitt durch die Mikrophonbaugruppe und das Fahrzeugdach gemäß der Linie IV-IV in Figur 2,
- Figur 5 eine Querschnittsansicht längs der Linie II-II durch das Fahrzeugdach und durch eine Mikrophonbaugruppe gemäß einer zweiten Ausführungsform,
- Figur 6 eine Querschnittsansicht längs der Linie III-III durch das Fahrzeugdach und die erfindungsgemäße Mikrophonbaugruppe nach der zweiten Ausführungsform und
- Figur 7 einen vergrößerten Schnitt durch die Mikrophonbaugruppe und das angrenzende Fahrzeugdach längs der Linie VII-VII in Figur 6.

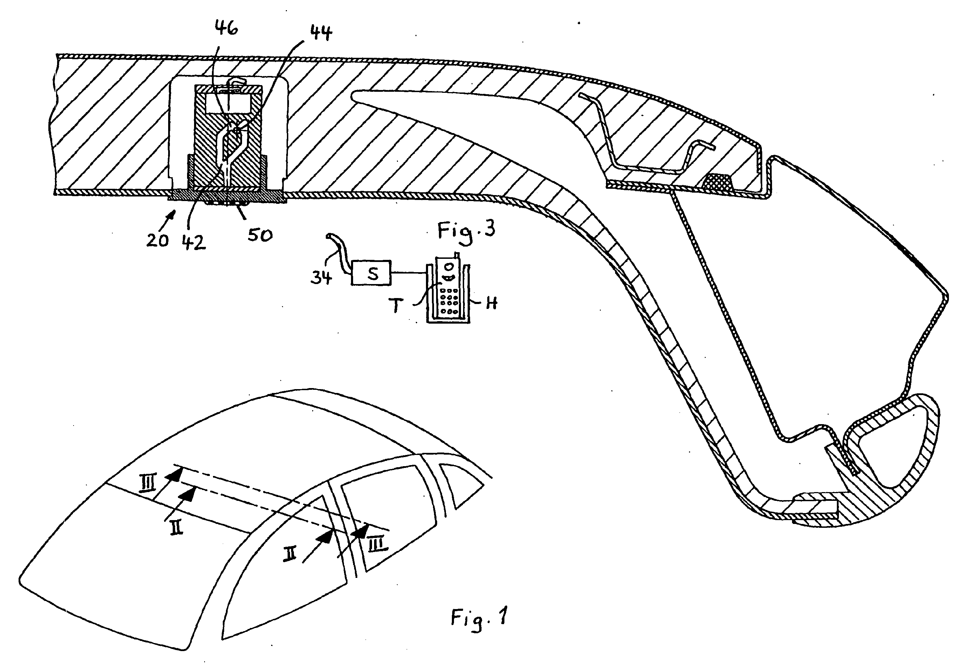

In Figur 1 ist ein Fahrzeugdach dargestellt, das zum Fahrzeuginnenraum hin mit einer sogenannten Dachhimmelverkleidung 10 (Fig. 2) versehen ist. Die Dachhimmelverkleidung 10 hat eine Schaumstoffschicht 12 und eine glatte Innenhaut 14. Mit 16 ist der Dachrahmen bezeichnet. Die Dachhimmelverkleidung 10 hat vorderhalb des Kopfes des Insassen eine zum Innenraum ursprünglich offene Einbuchtung 18, die von Haus aus vorgesehen sein kann oder nachträglich eingeschnitten wird. In die Einbuchtung 18 ist eine als vormontierte Einheit ausgebildete Mikrophonbaugruppe 20 eingesetzt. Über nicht gezeigte Kabel ist die Mikrophonbaugruppe an ein Autotelefon angeschlossen. Die Mikrophonbaugruppe bildet somit einen Teil einer Fahrzeugfreisprecheinrichtung.

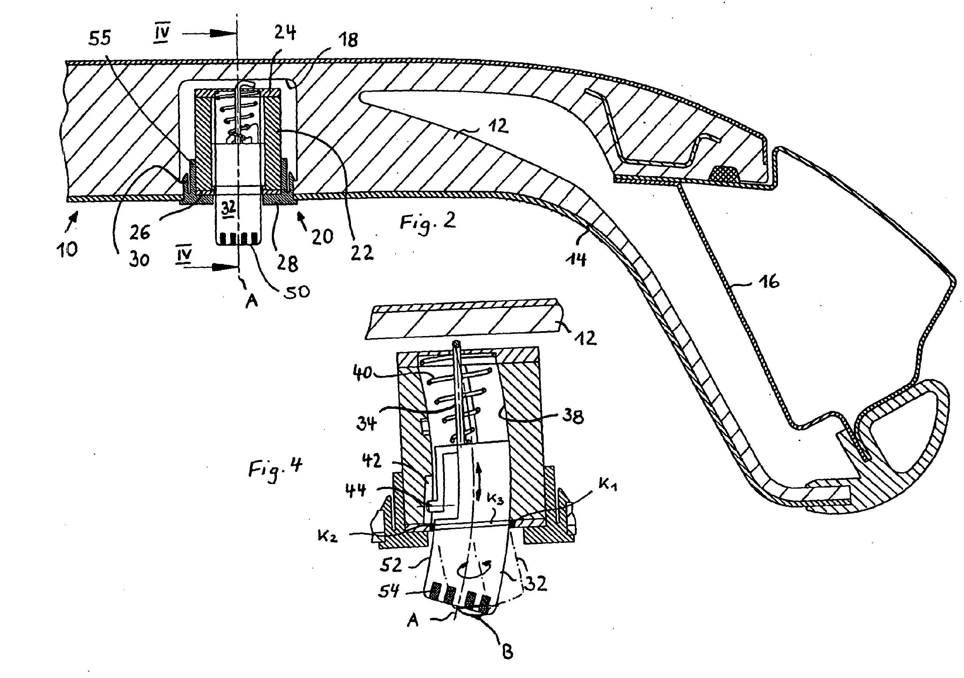

Die Freisprecheinrichtung ist in Fig. 3 näher dargestellt, sie umfaßt die Mikrophonbaugruppe 20, eine Steuerungseinheit S und eine Halterung H für ein herausnehmbares Handy T, wobei das Telefon auch fest im Fahrzeug eingebaut sein kann.

Die Mikrophonbaugruppe besteht aus relativ wenigen Teilen. Eine zylindrische Buchse 22, ein mit der Buchse 22 verbundener oberer Deckel 24 sowie ein mit der Buchse 22 verbundener unterer Deckel 26 bilden das Außengehäuse der Mikrophonbaugruppe. Im Bereich des unteren Endes der Buchse 22 und des unteren Deckels 26 werden diese von einer Hülse 28 umgeben, die gleichzeitig eine Befestigungseinrichtung für die gesamte Baugruppe 20 bildet, indem seitlich elastische Rastzähne 30 in den Schaum 12 eindringen. Die Buchse 22 bildet eine Längsführung für eine in sie eingesetzte Mikrophoneinheit 32. Die Mikrophoneinheit 32 hat die Gestalt eines seitlich gebogenen Zylinders mit einer bogenförmigen Längsachse A, wie in Figur 4 besser zu erkennen ist.

Von der Rückseite der Mikrophoneinheit 32 steht ein Verbindungskabel 34 zur Steuerungseinheit S ab, wobei das Kabel durch eine Öffnung im oberen Deckel 24 ragt. Die Führung für die Mikrophoneinheit 32 wird durch die Innenseite 38 der Buchse 22 gebildet, die insgesamt eine gebogen verlaufende Öffnung und ihre gebogene Wandung definiert, deren Längsachse mit der Längsachse A zusammenfällt.

Zwischen der Rückseite der Mikrophoneinheit 32 und dem oberen Deckel 24 ist eine Kegelfeder 40 vorgesehen, die Energiespeicher und Antrieb zum Ausfahren der Mikrophoneinheit 32 ist.

Die Mikrophoneinheit 32 ist nämlich zwischen einer fast vollständig in der Buchse 22 aufgenommenen, eingefahrenen Stellung und einer ausgefahrenen Stellung, die in den Figuren 2 und 3 gezeigt ist, reversibel verfahrbar, wie später noch ausführlich erläutert wird.

Neben der durch die Buchse 22 gebildeten bogenförmigen Führung ist zusätzlich auch noch eine Kulissenführung vorgesehen. Auf der Innenseite 38 ist, wie Figur 3 entnommen werden kann, eine Kulisse 42 vorgesehen, in die ein fingerartiger, seitlich elastischer Fortsatz 44 der Mikrophoneinheit 32 ragt.

In Figur 3 ist der Fortsatz 44 in einem V-förmigen Bereich 46 der Kulisse liegend dargestellt. Liegt der Fortsatz 44 in diesem V-förmigen Bereich, ist die Mikrophoneinheit 32 in der eingefahrenen Stellung und wird an einem Herausfahren gehindert.

Geht ein Telefonat ein oder will ein Fahrzeuginsasse das Mikrophon anschalten oder z.B. über Sprachsteuerung wählen, telefonieren und die Mikrophoneinheit, gegebenenfalls zusätzlich auch die Freisprecheinrichtung, in den Kommunikationsmodus bringen, drückt er auf die Stirnwand 50 der annähernd vollständig eingefahrenen Mikrophoneinheit 32 (siehe Figur 3). Die Mikrophoneinheit wird geringfügig nach oben gedrückt, so daß der Fortsatz 44 aus dem tiefsten Punkt des "V" im Bereich 46 herausbewegt wird und sich entlang eines Schenkels des "V" nach oben bewegt. Vom obersten Ende jedes Schenkels des "V" gehen vertikal nach unten verlaufende Abschnitte der Kulisse 42 aus. Sobald also die Mikrophoneinheit 32 ausreichend nach oben gedrückt worden ist, kann sie losgelassen werden, und ihr Fortsatz 44 kann in einer der beiden vertikal abwärts verlaufenden Abschnitte der Kulisse 42 nach unten gleiten. Die gesamte Mikrophoneinheit 32 wird durch den Federantrieb längs einer bogenförmigen Bahn, die der Achse A entspricht, in die ausgefahrene Stellung gebracht, in der zwei gegenüberliegende Kontakte K₁, K₂ durch einen ringförmigen Kontakt K₃ an der Mikrophoneinheit 32 verbunden werden und ein Stromkreis geschlossen wird, der der Steuereinheit anzeigt, daß die ausgefahrene Stellung erreicht ist und zumindest die Mikrophoneinheit in den "EIN"-Zustand gelangen soll.

Kurz bevor die vollständig ausgefahrene Stellung erreicht wird, tritt eine Dämpfung in Kraft, mittels der die Mikrophoneinheit 32 abgebremst wird. Diese Dämpfung kann durch eine gezielt zunehmende Reibung zwischen der Führung und der Mikrophoneinheit 32, genauer gesagt deren Mantelfläche 52, die eine an die Führung angepaßte Führungsfläche darstellt, erzielt werden.

In der vollständig ausgefahrenen Stellung kann die Mikrophoneinheit 32 in ihrer Führung oder mit ihr verschwenkt werden, so daß das aus der Führung herausragende, freie Ende wie ein Exzenter vorzugsweise auf einer Kreisbahn B wandert. Diese Bahn wird durch die bogenförmige Gestalt der Führung und die bogenförmige Gestalt der Mantelfläche 52 erzielt.

Das Mikrophon wird durch Drehen in eine andere Richtung ausgerichtet, insbesondere weil die Mikrophoneingangsöffnungen 54 an der Stirnfläche 50 und teilweise an der Mantelfläche 52 in eine andere Richtung ragen. Damit kann das Mikrophon vom Fahrer auf den Beifahrer ausgerichtet werden.

Die bogenförmige Führung und die durch die Mantelfläche 52 gebildete Führungsfläche an der Mikrophoneinheit können so aufeinander abgestimmt werden, daß in der ausgefahrenen Stellung das Verschwenken möglich ist. Dies kann beispielsweise dadurch erfolgen, daß die Buchse 22 und/oder das bezüglich Figur 4 in die Führung hineinragende Ende der Mikrophoneinheit 32 nachgiebig ausgeführt sind, oder daß das untere Ende der Führung relativ zum oberen Ende der Mikrophoneinheit 32 genügend Spiel aufweist. Bei der dargestellten Ausführungsform ist zum Drehen die gesamte Buchse 22 samt der darin untergebrachten Mikrophoneinheit 32, sozusagen als eine Einheit in einer zylindrischen Aufnahme 55 der Hülse 28 dreh- oder schwenkbar. Die Hülse 28 ist also ein Gleitlager für die Einheit aus Buchse 22 und Mikrophoneinheit 32.

Die Schwenkbewegung kann kleiner als 180 Grad sein. Aber auch eine Endlosdrehung kann ermöglicht werden. Die bogenförmige Bahn, entlang der das aus der Führung herausragende Ende der Mikrophoneinheit 32 beim Schwenken wandert, wird durch die Bahn B in Figur 4 symbolisiert, die von den beiden Extremlagen des Mittelpunktes der Stirnfläche 50 ausgeht.

Zum Beenden des Gesprächs und Schalten des Kommunikationsmodus auf "AUS" drückt man einfach die Mikrophoneinheit 32 zurück in ihre Führung, bis der Fortsatz 44 wieder an der tiefsten Stelle des "V" liegt. Die Kontakte K₁, K₂ werden nicht mehr durch Kontakt K₃ verbunden. Die von der Bedienperson beim Zurückschieben der Mikrophoneinheit 32 in die eingefahrene Stellung aufgebrachte Energie wird damit in der Feder 40 gespeichert, und die Feder gibt sie beim selbsttätigen Herausfahren der Mikrophoneinheit später wieder wenigstens teilweise ab.

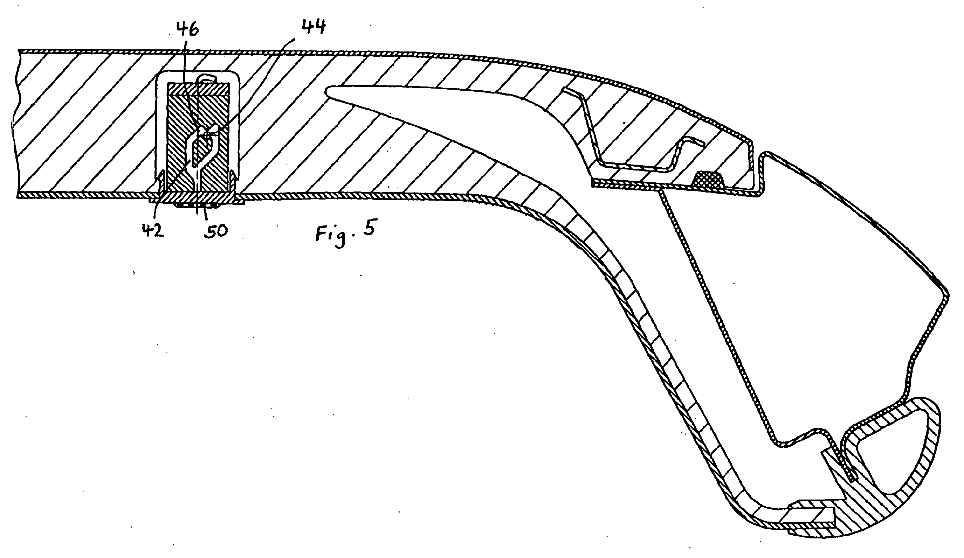

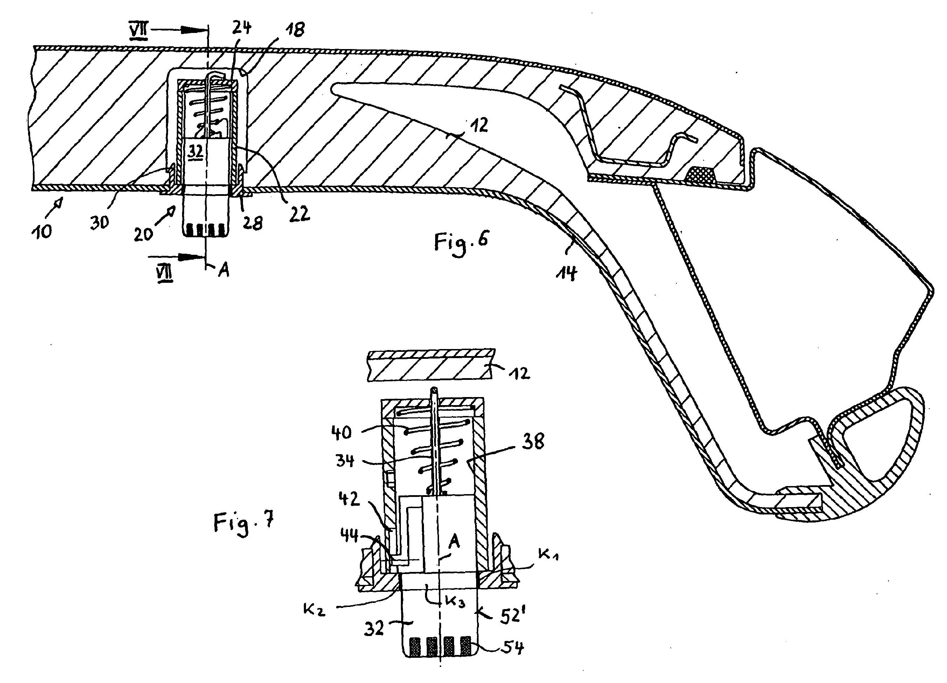

Die Ausführungsform nach den Figuren 5 bis 7 entspricht im wesentlichen der zuvor beschriebenen, so daß nur noch auf die Unterschiede eingegangen wird und für funktionsgleiche Teile die bereits eingeführten Bezugszeichen beibehalten werden.

Auch bei dieser Ausführungsform ist die Mikrophoneinheit 32 zwischen einer eingefahrenen und einer ausgefahrenen Stellung betätigbar. Jedoch ist die Führung, das heißt die Innenseite 38 der Buchse 22 nicht bogenförmig, sondern kreiszylindrisch ausgeführt. Auch die Mikrophoneinheit 32 hat eine zylindrische Mantelfläche 52', so daß eine geradlinige Bewegung längs der Achse A zwischen der eingefahrenen und der ausgefahrenen Stellung möglich ist.

Darüber hinaus ist aber auch in der ausgefahrenen Stellung hier wieder ein verändertes Ausrichten der Mikrophoneinheit 32 möglich. Dies kann beispielsweise dadurch erfolgen, daß die Mikrophoneingangsöffnungen 54 nur an bestimmten Abschnitten der Mantelfläche 52' vorgesehen sind. Die Mikrophoneingangsöffnungen 54 werden entweder zum Fahrer oder zum Beifahrer ausgerichtet, wenn die Mikrophoneinheit 32 um ihre Achse A in der Führung gedreht wird.

Der untere Deckel 26 ist bei dieser Ausführungsform weggelassen, seine Aufgabe übernimmt die Hülse 28.

## Patentansprüche

1. Mikrophonbaugruppe für eine Fahrzeugfreisprecheinrictung, mit
einer Führung und einer Mikrophoneinheit (32),
wobei die Mikrophoneinheit (32) zwischen einer eingefahrenen Stellung, in der die Mikrophoneinheit (32) in der Führung zumindest fast vollständig versenkt ist, und einer ausgefahrenen Stellung, in der die Mikrophoneinheit (32) weiter aus der Führung herausragt als in der eingefahrenen Stellung, reversibel verfahrbar ist,
**dadurch gekennzeichnet, daß**
die Führung eine die Mikrophoneinheit (32) umgebende Buchse (22) ist, die die Mikrophoneinheit (32) in der eingefahrenen Stellung aufnimmt, und daß
die Mikrophoneinheit (32) durch ihr Ausfahren in einen Kommunikationsmodus geschaltet wird und in der eingefahrenen Stellung der Kommunikationsmodus ausgeschaltet ist.

2. Mikrophonbaugruppe nach Anspruch 1, **dadurch gekennzeichnet, daß** eine Befestigungseinrichtung an der Führung angreift, mit der die Baugruppe in einem Verkleidungsteil (10) im Fahrzeuginneren befestigbar ist.

3. Mikrophonbaugruppe nach Anspruch 2, **dadurch gekennzeichnet, daß** die Befestigungseinrichtung eine Rastverbindung ist.

4. Mikrophonbaugruppe nach einem der vorhergehenden Ansprüche, **gekennzeichnet durch** einen Antrieb zum Ausfahren der Mikrophoneinheit.

5. Mikrophonbaugruppe nach Anspruch 4, **dadurch gekennzeichnet, daß** der Antrieb von Energiequellen des Fahrzeugs entkoppelt ist.

6. Mikrophonbaugruppe nach Anspruch 4 oder 5, **dadurch gekennzeichnet, daß** sie einen Energiespeicher hat, der die von einer Bedienperson aufgebrachte Energie zum Zurückschieben der Mikrophoneinheit (32) in die eingefahrene Stellung speichert und sie beim selbsttätigen Herausfahren der Mikrophoneinheit wenigstens teilweise wieder abgibt.

7. Mikrophonbaugruppe nach einem der Ansprüche 4 bis 6, **dadurch gekennzeichnet, daß** der Antrieb ein Federantrieb ist.

8. Mikrophonbaugruppe nach einem der vorhergehenden Ansprüche, **dadurch gekennzeichnet, daß** durch Drücken auf die Mikrophoneinheit (32) diese in die ausgefahrene Stellung verschoben wird.

9. Mikrophonbaugruppe nach einem der vorhergehenden Ansprüche, **dadurch gekennzeichnet, daß** eine Dämpfung vorgesehen ist, die beim Ausfahren die Mikrophoneinheit nahe ihrer ausgefahrenen Stellung abbremst.

10. Mikrophonbaugruppe nach einem der vorhergehenden Ansprüche, **dadurch gekennzeichnet, daß** die Mikrophoneinheit (32) zumindest in der ausgefahrenen Stellung in oder zusammen mit der Führung verdreh- oder verschwenkbar ist.

11. Mikrophonbaugruppe nach einem der vorhergehenden Ansprüche, **dadurch gekennzeichnet, daß** die Führung so bogenförmig ausgebildet ist, daß die Mikrophoneinheit (32) auf einer bogenförmigen Bahn in die ausgefahrene Stellung verschiebbar ist.

12. Mikrophonbaugruppe nach Anspruch 10 und 11, **dadurch gekennzeichnet, daß** die Mikrophoneinheit (32) eine der Führung angepaßte bogenförmige Führungsfläche hat.

13. Mikrophonbaugruppe nach Anspruch 12, **dadurch gekennzeichnet, daß** die Mikrophoneinheit (32) die Gestalt eines quer zur Längsachse gebogenen Zylinders hat, dessen Außenkontur die Führungsfläche bildet.

14. Mikrophonbaugruppe nach einem der vorhergehenden Ansprüche, **dadurch gekennzeichnet, daß** Mikrophoneingangsöffnungen (54) am freien Ende der Mikrophoneinheit (32) so angeordnet sind, daß sie durch das Schwenken in eine andere Richtung ausgerichtet werden.

15. Mikrophonbaugruppe nach einem der vorhergehenden Ansprüche, **dadurch gekennzeichnet, daß** zusätzlich eine Kulissenführung vorgesehen ist, durch die die Mikrophoneinheit (32) in der eingefahrenen Stellung gehalten wird.

16. Mikrophonbaugruppe nach Anspruch 15, **dadurch gekennzeichnet, daß** auf der Innenseite der buchsenförmigen Führung eine Kulisse (42) vorgesehen ist.

17. Mikrophonbaugruppe nach Anspruch 16, **dadurch gekennzeichnet, daß** von der Mikrophoneinheit (32) seitlich ein in die Kulisse (42) hineinragender Fortsatz (44) vorsteht.

18. Fahrzeugfreisprecheinrichtung mit einer Mikrophonbaugruppe nach einem der vorhergehenden Ansprüche, **dadurch gekennzeichnet, daß** durch Ausfahren der Mikrophoneinheit diese und die Freisprecheinrichtung in den Kommunikationsmodus geschaltet werden, der wenigstens eine der folgenden Funktionen erlaubt:
a) Einschalten des Mikrophons
b) Annahme eines ankommenden Gespräches
c) Einschalten der Freisprecheinrichtung zum Wählen mittels Sprachsteuerung.

## Claims

1. A microphone assembly for a hands-free talking equipment in a motor vehicle, comprising
a guide and a microphone unit (32),
the microphone unit (32) being reversibly movable between a retracted position in which the microphone unit (32) is at least almost completely inserted in the guide, and an extended position in which the microphone unit (32) protrudes more from the guide than in the retracted position,
**characterized in that**
the guide is a bushing (22) surrounding the microphone unit (32) and receiving the microphone unit (32) in the retracted position, and **in that**
the microphone unit (32), by it being extended, is switched into a communication mode which is switched off in the retracted position.

2. The microphone assembly according to claim 1, **characterised in that** a fastening device engages the guide, the microphone assembly being adapted to be fastened in a lining part (10) in the vehicle interior by means of the fastening device.

3. The microphone assembly according to claim 2, **characterised in that** the fastening device is a latching device.

4. The microphone assembly according to any of the preceding claims, **characterised by** a drive for extending the microphone unit.

5. The microphone assembly according to claim 4, **characterised in that** the drive is decoupled from energy sources of the motor vehicle.

6. The microphone assembly according to claim 4 or 5, **characterised in that** it comprises an energy store which stores the energy applied by an operator during pushing back the microphone unit (32) into the retracted position, the energy store at least partially redelivering the energy during the automatic extending of the microphone unit.

7. The microphone assembly according to any of the claims 4 to 6, **characterised in that** the drive is a spring drive.

8. The microphone assembly according to any of the preceding claims, **characterised in that** the microphone unit (32) is shifted into the extended position by depressing it.

9. The microphone assembly according to any of the preceding claims, **characterised in that** a damping device is provided which during extending slows down the microphone unit in the proximity of its extended position.

10. The microphone assembly according to any of the preceding claims, **characterised in that** the microphone unit (32) can be rotated or swivelled at least in the extended position in the guide or together with it.

11. The microphone assembly according to any of the preceding claims, **characterised in that** the guide is bow-shaped such that the microphone unit (32) can be shifted into the extended position on a bow-shaped path.

12. The microphone assembly according to claim 10 and 11, **characterised in that** the microphone unit (32) has a bow-shaped guide surface adapted to the guide.

13. The microphone assembly according to claim 12, **characterised in that** the microphone unit (32) has the shape of a cylinder which is bent transversely to its longitudinal axis, the outer contour of which forming the guide surface.

14. The microphone assembly according to any of the preceding claims, **characterised in that** microphone entrance openings (54) are arranged on the free end of the microphone unit (32) such that by the pivoting action they are oriented so as to point in another direction.

15. The microphone assembly according to any of the preceding claims, **characterised in that** a slide guide is provided in addition, by means of which the microphone unit (32) is retained in the retracted position.

16. The microphone assembly according to claim 15, **characterised in that** a slot (42) is provided on the inner side of the bushing-shaped guide.

17. The microphone assembly according to claim 16, **characterised in that** a protrusion (44) protrudes from the microphone unit (32) and laterally projects into the slot (42).

18. A vehicular hands-free talking equipment comprising a microphone unit according to any of the preceding claims, **characterised in that** by extending the microphone unit, the latter and the hands-free talking equipment are switched over to the communication mode which allows at least one of the following functions:
a) switching on the microphone,
b) accepting an incoming phone call,
c) switching on the hands-free talking equipment for voice-controlled dialling.

## Revendications

1. Ensemble microphone pour un dispositif mains libres véhiculaire, comportant un guidage et une unité de microphone (32),
l'unité de microphone (32) pouvant être déplacée de manière réversible entre une position rétractée dans laquelle l'unité de microphone (32) est au moins presque totalement enfoncée dans le guidage, et une position de sortie dans laquelle l'unité de microphone (32) fait plus saillie hors du guidage que dans la position rétractée,
**caractérisé en ce que**
le guidage est une douille (22) entourant l'unité de microphone (32), qui reçoit l'unité de microphone (32) dans la position rétractée, et **en ce que**
par sa sortie, l'unité de microphone (32) est connectée dans un mode de communication et dans la position rétractée, le mode de communication est déconnecté.

2. Ensemble microphone selon la revendication 1, **caractérisé en ce que** sur le guidage s'engage un système de fixation par lequel l'ensemble peut être fixé dans une partie de revêtement à l'intérieur du véhicule.

3. Ensemble microphone selon la revendication 2, **caractérisé en ce que** le système de fixation est une liaison par enclenchement.

4. Ensemble microphone selon l'une des revendications précédentes, **caractérisé par** un entraînement pour faire sortir l'unité microphone.

5. Ensemble microphone selon la revendication 4, **caractérisé en ce que** l'entraînement est découplé de sources d'énergie du véhicule.

6. Ensemble microphone selon la revendication 4 ou 5, **caractérisé en ce qu'**il possède un accumulateur d'énergie qui accumule l'énergie appliquée par un opérateur pour ramener l'unité de microphone (32) jusque dans la position rétractée et qui la fournit de nouveau au moins partiellement lors de la sortie automatique de l'unité de microphone.

7. Ensemble microphone selon l'une des revendications 4 à 6, **caractérisé en ce que** l'entraînement est un entraînement à ressort.

8. Ensemble microphone selon l'une des revendications précédentes, **caractérisé en ce qu'**en pressant sur l'unité de microphone (32), celle-ci est ramenée dans la position sortie.

9. Ensemble microphone selon l'une des revendications précédentes, **caractérisé en ce qu'**il est prévu un amortissement qui, lors de la sortie, freine l'unité de microphone près de sa position sortie.

10. Ensemble microphone selon l'une des revendications précédentes, **caractérisé en ce qu'**au moins dans la position sortie, l'unité de microphone (32) peut être tournée ou pivotée dans ou conjointement avec le guidage.

11. Ensemble microphone selon l'une des revendications précédentes, **caractérisé en ce que** le guidage est réalisé en forme arquée de telle sorte que l'unité de microphone (32) peut être déplacée sur une voie de forme arquée jusque dans la position sortie.

12. Ensemble microphone selon la revendication 10 ou 12, **caractérisé en ce que** l'unité de microphone (32) a une surface de guidage de forme arquée adaptée au guidage.

13. Ensemble microphone selon la revendication 12, **caractérisé en ce que** la forme d'un cylindre arqué perpendiculaire à axe longitudinal, dont le contour extérieur forme la surface de guidage.

14. Ensemble microphone selon l'une des revendications précédentes, **caractérisé en ce que** des ouvertures d'entrée de microphone (54) sont agencées à l'extrémité libre de l'unité de microphone (32) de telle sorte que par le pivotement, elles sont orientées dans une autre direction.

15. Ensemble microphone selon l'une des revendications précédentes, **caractérisé en ce qu'**il est additionnellement prévu un guidage à coulisse par lequel l'unité de microphone (32) est maintenue dans la position rétractée.

16. Ensemble microphone selon la revendication 15, **caractérisé en ce qu'**une coulisse (42) est prévue sur la face intérieure du guidage en forme de douille.

17. Ensemble microphone selon la revendication 16, **caractérisé en ce que** depuis l'unité de microphone (32) fait saillie un prolongement (44) se projetant latéralement dans la coulisse (42).

18. Système de dispositif mains libres véhiculaire comportant un ensemble microphone selon l'une des revendications précédentes, **caractérisé en ce qu'**en faisant sortir l'unité de microphone, celle-ci et le système mains libres sont connectés dans le mode de communication qui permet au moins une des fonctions suivantes :
a) mise en marche du microphone
b) réception d'un appel
c) mise en marche du système de dispositif mains-libres pour faire un numéro par commande vocale.
